# EUROPÄISCHE PATENTANMELDUNG

(11) **EP 1 380 907 A1**
(43) Veröffentlichungstag der Anmeldung: **14.01.2004**
(21) Anmeldenummer: 02015478.7
(22) Anmeldetag: 12.07.2002
(51) Int. Cl.: G05B 19/042

(54) **Elektronische Einheit für ein Feldgerät**

(71) Anmelder: ABB Research Ltd., 8050 Zürich (CH)
(72) Erfinder: Langer, Kurt, Dr. rer. nat., 69190 Walldorf (DE); Lorito, Fabrizio, Milano (IT); Lohbeck, Axel, 32425 Minden (DE)
(74) Vertreter: Miller, Toivo

(57) **Zusammenfassung**

Die Erfindung betrifft eine elektronische Einheit für ein Feldgerät, insbesondere für ein Feldgerät zur Verwendung im Bereich der Prozessautomatisierung, wobei die elektronische Einheit zumindest im Betriebszustand wenigstens einen Mikroprozessor (4) und Speichermittel (5) aufweist.

Erfindungsgemäß ist vorgesehen, dass die elektronische Einheit wenigstens eine Schnittstelle für eine Smart-Card (6) aufweist, die im Betriebszustand der elektronischen Einheit zumindest einen Mikroprozessor (4) und/oder zumindest einen Teil der Speichermittel (5) bereitstellt.

## Beschreibung

Die Erfindung betrifft eine elektronische Einheit für ein Feldgerät, insbesondere für ein Feldgerät zur Verwendung im Bereich der Prozessautomatisierung, wobei die elektronische Einheit zumindest im Betriebszustand wenigstens einen Mikroprozessor und Speichermittel aufweist. Weiterhin betrifft die Erfindung die Verwendung einer Smart-Card in einer erfindungsgemäßen elektronischen Einheit sowie ein Feldgerät, das mit einer erfindungsgemäßen elektronischen Einheit ausgestattet ist. Die Erfindung betrifft auch ein Verfahren zur Durchführung einer Datensicherung bei einem mit einer erfindungsgemäßen elektronischen Einheit ausgestatteten Feldgerät. Darüber hinaus betrifft die Erfindung ein Verfahren zum Übertragen von Daten von einem ersten mit einer erfindungsgemäßen elektronischen Einheit ausgestatteten Feldgerät zu einem zweiten mit einer erfindungsgemäßen elektronischen Einheit ausgestatteten Feldgerät. Weiterhin betrifft die Erfindung ein Verfahren zur Durchführung einer Hard- und/oder Softwareaktualisierung bei einem Feldgerät, das mit einer erfindungsgemäßen elektronischen Einheit ausgestattet ist.

Feldgeräte, die die gattungsgemäßen elektronischen Einheiten aufweisen, werden insbesondere im Zusammenhang mit Feldbussystemen verwendet, die als Kommunikationsmittel zum Datenaustausch zwischen dezentralen Geräten der Feldebene und der Eingabe-/Ausgabeperipherie der Prozessleitebene dienen. Für die Prozessdatenerfassung in der Feldebene kommen neben intelligenten Sensoren und Aktoren mit Direktanschluss an den Feldbus auch intelligente "Remote-I/O's" als Interface-Systeme für konventionelle Feldgeräte zum Einsatz. Über nur zwei Drähte können häufig alle relevanten Signale wie Ein- und Ausgabedaten, Parameter, Diagnoseinformationen, Konfiguriervorgaben und - für einen weiteren Anwendungsbereich - die Betriebsenergie übertragen werden. Hat ein Feldgerät einen hohen Energiebedarf, so wird die Versorgung für dieses Gerät in der Regel getrennt von dem Signalbus geführt. Durch die eindeutige Festlegung des Kommunikationsprotokolls ist es möglich, den Feldbus für alle Anbieter, die das Protokoll für ihre Geräte nutzen, offen zu halten. Dadurch kann beispielsweise erreicht werden, dass die heute übliche Austauschbarkeit durch das 4-20 mA-Einheitssignal auch für die Feldbustechnologie erhalten bleibt. Aus dem Vorstehenden ergibt sich, dass die gattungsgemäßen Feldgeräte, ohne darauf beschränkt zu sein, insbesondere Sensoren, Sender und Aktoren, die eine insbesondere zur Signalerfassung und Signalbearbeitung erforderliche elektronische Schaltung aufweisen, und andere zusätzliche elektronische Geräte umfassen, beispielsweise Remote-l/O's und Gateways, die zur Kommunikation erforderlich sind und zwischen dem Feld und der Prozessleitebene eines Systems mit verteilter Regelung/Steuerung angeordnet sein können. Diese Komponenten können gegebenenfalls Steuer-/Regel-funktionen oder andere zusätzliche Funktionen ausführen, beispielsweise im Zusammenhang mit der Überwachung, der Diagnose und dem Anlagemanagement.

Die gattungsgemäßen elektronischen Einheiten herkömmlicher Feldgeräte sind in der Regel Spezialentwicklungen, die bestimmte Hard- und Softwareanforderungen erfüllen. Zu den Hauptbestandteilen der elektronischen Einheiten zählen Mikroprozessoren und Speichermittel (RAM, ROM, EPROM, EEPROM, Flash-Memory). Dies erlaubt bereits in einem gewissen Umfang, dass ein entwickeltes Schaltungsdesign für unterschiedliche Gerätetypen verwendet werden kann. Aufgrund der sehr unterschiedlichen Anforderungen an die jeweiligen Feldgeräte werden jedoch nach wie vor sehr viele unterschiedliche elektronische Einheiten für Feldgeräte entwickelt und hergestellt. Daher bewegt sich die Anzahl der hergestellten elektronischen Einheiten mit gleichem Schaltungslayout und gleicher Bauteilbestückung häufig im Bereich der Herstellungszahl eines bestimmten Feldgerätetyps.

Ein weiteres Problem besteht darin, dass der Umfang der in Feldgeräten implementierten Software ständig steigt, weil die Feldgeräte immer mehr Funktionen ausführen müssen. Insbesondere die eingeschränkte Leistungsfähigkeit der verwendeten Mikroprozessoren und/oder der begrenzte Speicherplatz führt dazu, dass als Programmiersprachen häufig noch Assembler oder C verwendet werden, was die Softwareentwicklung aufwendig macht. Zwar könnte ein objektorientiertes oder ein komponentenorientiertes Softwareengineering die Wiederverwendung von Codes ermöglichen und somit die Entwicklungskosten und -zeit verringern, ein auf diese Weise erzeugter Code erfordert jedoch eine Hardwareleistungsfähigkeit, die den Kostenrahmen in vielen Fällen sprengt.

Zusammenfassend lässt sich feststellen, dass sowohl die Kosten für Mikroprozessoren mit ausreichender Leistungsfähigkeit als auch die Kosten für die Speichermittel und die erforderliche Softwareentwicklung beim Stand der Technik zu Einschränkungen führen. Sofern es sich um Feldgeräte handelt, die über den Feldbus mit Energie versorgt werden, beispielsweise über einen 4-20 mA-Anschluss, muss auch die Leistungsaufnahme der elektronischen Einheit berücksichtigt werden.

Der Erfindung liegt die **Aufgabe** zugrunde, die gattungsgemäßen elektronischen Einheiten für Feldgeräte derart weiterzubilden, dass sie im Vergleich zum Stand der Technik kostengünstiger herstellbar und universeller einsetzbar sind.

Diese Aufgabe wird durch die Merkmale des Anspruchs 1 gelöst.

Vorteilhafte Ausgestaltungen und Weiterbildungen der Erfindung ergeben sich aus den abhängigen Ansprüchen.

Die erfindungsgemäße elektronische Einheit für ein Feldgerät baut auf dem gattungsgemäßen Stand der Technik dadurch auf, dass sie wenigstens eine Schnittstelle für eine Smart-Card aufweist, die im Betriebszustand der elektronischen Einheit zumindest einen Mikroprozessor und/oder zumindest einen Teil der Speichermittel bereitstellt. Als Smart-Cards kommen sowohl Speicherkarten als auch Mikroprozessorkarten in Betracht. Speicherkarten sind lediglich zum Speicher von Daten vorgesehen und können beispielsweise wie eine Diskette betrachtet werden, wobei gegebenenfalls zusätzliche Sicherheitsmerkmale vorgesehen sein können. Im Gegensatz hierzu ist eine Mikroprozessorkarte beispielsweise dazu in der Lage, den auf der Mikroprozessorkarte vorgesehenen Speichermitteln gespeicherte Informationen hinzuzufügen, zu löschen und zu manipulieren. Mikroprozessor-Smart-Cards weisen neben dem Mikroprozessor und den Speichermitteln in der Regel weitere Hardwaremodule, beispielsweise Eingabe/Ausgabe-Ports, und Software auf, die den gewünschten Betrieb der Smart-Card unter den jeweiligen Umgebungsbedingungen ermöglichen. Sogenannten High-End-Smart-Cards werden derzeit beispielsweise mit der 0,18 µm Prozesstechnologie hergestellt und sind mit einem 32-Bit-Mikroprozessor ausgestattet, wodurch beispielsweise die direkte Ausführung von Java-Byte-Code ermöglicht wird. Ein Beispiel für eine derartige Smart-Card ist der Typ ST22 von der Firma ST Microelectronics, deren erste Version mit 4 KB SRAM, 96 KB ROM und 64 KB EEPROM ausgestattet ist. Allgemein werden Smart-Cards derzeit im Zusammenhang mit Telefonen, Verkehrsmitteln, Bank- und Geldgeschäften, dem Gesundheitswesen, Zugangskontrollen, Wertspeicherungen, der Identifizierung und des Ticket-Erwerbs verwendet. Zunehmend werden Smart-Cards, die auch unter den Hersteller- und/oder Händlerbezeichnungen Microprocessor-Cards, Memory-Cards, Java-Cards oder SIM-Cards bekannt sind, auch im Zusammenhang mit Internetanwendungen eingesetzt.

Die erfindungsgemäße Verwendung von Smart-Cards im Zusammenhang mit Feldgeräten ist besonders vorteilhaft, weil:
- Smart-Cards in hohen und ständig wachsenden Stückzahlen hergestellt werden und sich die Technologie schnell entwickelt;
- das Preis-Leistungs-Verhältnis aufgrund der hohen Herstellungsstückzahlen und der neusten Herstellungstechnologien extrem gut ist (der Durchschnittspreis für eine Mikroprozessor-Smart-Card beträgt derzeit etwa 4 EUR, der einer Speicher-Smart-Card etwa 0,5 EUR);
- die neusten Chiptechnologien (Strukturen von 0,18 µm oder weniger mit niedriger Versorgungsspannung) ein Maximum an Leistung bei einer niedrigen Leistungsaufnahme (im Bereich von beispielsweise 20 mW für High-End-Smart-Cards) ermöglichen;
- offene Standards für die Kommunikation, die Sicherheit und die Entwicklung existieren;
- Entwicklungsumgebungen verfügbar sind;
- bei bestimmten Smart-Cards ein kontaktloser Betrieb möglich ist, das heißt die Smart-Cards können ohne mechanische Kontakte eingesetzt und entfernt werden;
- eine Software-Laufzeit-Unterstützung möglich ist;
- Softwareaktualisierungen unterstützt werden können;
- auf den Smart-Cards gespeicherte Informationen durch einen PIN-Code gesichert und/oder lese-schreib-geschützt werden können;
- portable Softwarekomponenten unterstützt werden (beispielsweise die Java-Byte-Code-Ausführung);
- eine sichere Benutzeranmeldung und -legalisierung möglich ist;
- die Speicherung von digitalen Zertifikaten, Beglaubigungen und Passwörtern möglich ist;
- die Verschlüsselung von sensiblen Daten möglich ist; und
- jede Smart-Card eine eindeutige Seriennummer aufweist.

Bei bevorzugten Ausführungsformen der erfindungsgemäßen elektronischen Einheit ist vorgesehen, dass sie im Betrieb auf der zumindest einen Smart-Card vorgesehene Speichermittel zum Speichern von Produktdaten und/oder Produktidentifikationsdaten und/oder Konfigurationsdaten und/oder während des Betriebs erzeugten Temporärdaten und/oder zu Wartungszwecken verwendeten Lebensdauerdaten verwendet. Allgemein hängen die in den Speichermitteln zu speichernden Daten vom jeweiligen Typ und der jeweiligen Beschaffenheit des Feldgerätes ab, weshalb die vorstehend genannten Datentypen nur Beispiele sind.

Bei besonders bevorzugten Ausführungsformen der erfindungsgemäßen elektronischen Einheit ist vorgesehen, dass sie im Betrieb auf der zumindest einen Smart-Card vorgesehene Speichermittel zum Speichern von Programmdaten verwendet, die von zumindest einem Mikroprozessor der elektronischen Einheit abgearbeitet werden. Insbesondere wenn sowohl der die Programmdaten abarbeitende Mikroprozessor als auch die die Programmdaten enthaltenden Speichermittel durch eine oder mehrere Smart-Cards bereitgestellt werden, ermöglicht diese Lösung beispielsweise eine einfache Hardund/oder Softwareaktualisierung.

Bevorzugte Weiterbildungen der erfindungsgemäßen elektronischen Einheit zeichnen sich dadurch aus, dass sie im Betrieb einen auf der zumindest einen Smart-Card vorgesehenen Mikroprozessor zur Signalgewinnung und/oder zur Signalverarbeitung und/oder zur Steuerung der Kommunikation zwischen Komponenten der elektronischen Einheit und/oder zur Steuerung der Kommunikation mit externen Komponenten und/oder zum Datenaustausch mit den Speichermitteln verwendet. Bei den Komponenten der elektronischen Einheit kann es sich beispielsweise um gerätespezifische analoge Schaltungen und/oder gerätespezifische digitale Schaltungen und/oder Energieversorgungseinheiten handeln. Die gerätespezifischen analogen Schaltungen können beispielsweise zur Sensorsignalkonditionierung, zur analogen Ein-/Ausgabe und/oder zur Leistungsansteuerung von Aktoren verwendet werden. Die gerätespezifischen digitalen Schaltungen können beispielsweise zur binären Ein-/Ausgabe und/oder zur Kommunikation mit einem Feldbus verwendet werden.

Als besonders vorteilhaft für die erfindungsgemäße elektronische Einheit wird es erachtet, dass sie im Betrieb einen auf der zumindest einen Smart-Card vorgesehenen Mikroprozessor zur Durchführung von Prozess-Steuerungs-/Regelungs-Funktionen verwendet. Dadurch wird es in einfacher Weise möglich, auf der Feldebene verteilte Steuerungsfunktionen vorzusehen.

Bei bestimmten Ausführungsformen der erfindungsgemäßen elektronischen Einheit kann vorgesehen sein, dass zumindest eine Schnittstelle für eine Smart-Card eine kontaktlose Schnittstelle ist. Zu diesem Zweck kann beispielsweise die Norm ISO/IEC 7816-1 Verwendung finden.

Zusätzlich oder alternativ kann vorgesehen sein, dass zumindest eine Schnittstelle für eine Smart-Card eine Schnittstelle mit mechanischen Kontakten ist. Zu diesem Zweck kann beispielsweise die Norm ISO/IEC 7816-2 Anwendung finden.

Besonders bevorzugte Ausführungsformen der erfindungsgemäßen elektronischen Einheit zeichnen sich dadurch aus, dass die zumindest eine Smart-Card im Betrieb der elektronischen Einheit über ein oder mehrere Smart-Card-Standardprotokolle mit Komponenten der elektronischen Einheit kommuniziert. Als Protokolle kommen dabei beispielsweise die in den Normen ISO/IEC 7816-3, ISO/IEC 7816-4, lSO/IEC 7816-5, ISO/IEC 7816-6, ISO/IEC 7816-7, ISO/IEC DIS 7816-8, ISO/IEC DIS 7816-9, ISO/IEC DIS 7816-10 festgelegten Protokolle in Frage.

Jede Verwendung einer Smart-Card in einer Ausführungsform der erfindungsgemäßen elektronischen Einheit fällt in den Schutzbereich der zugehörigen Ansprüche.

Gleiches gilt für jedes Feldgerät, das mit einer erfindungsgemäßen elektronischen Einheit ausgestattet ist.

Die Erfindung betrifft auch ein Verfahren zur Durchführung einer Datensicherung bei einem Feldgerät, das eine erfindungsgemäße elektronische Einheit aufweist, mit den folgenden Schritten:
- Speichern der zu sichernden Daten auf einer Smart-Card; und
- Entnehmen der Smart-Card aus dem Feldgerät.

Dabei ist es vorteilhaft, wenn die Speichermittel nicht vollständig auf der aus dem Feldgerät zu entnehmenden Smart-Card angeordnet sind, da es in diesem Fall möglich ist, die zu sichernden Daten vor der Entnahme der Smart-Card aus dem Feldgerät zu duplizieren.

Weiterhin betrifft die Erfindung ein Verfahren zum Übertragen von Daten von einem ersten Feldgerät, das eine erfindungsgemäße elektronische Einheit aufweist, zu einem zweiten Feldgerät, das eine erfindungsgemäße elektronische Einheit aufweist, mit den folgenden Schritten:
- Einsetzen einer Smart-Card in das erste Feldgerät;
- Speichern der zu übertragenden Daten auf der Smart-Card;
- Entfernen der Smart-Card aus dem ersten Feldgerät; und
- Einsetzen der Smart-Card in das zweite Feldgerät.

Eine derartige Übertragung von Daten kann beispielsweise erforderlich sein, wenn ein Feldgerät einen Defekt aufweist und daher ausgetauscht werden muss.

Die Erfindung betrifft auch ein Verfahren zur Durchführung einer Hard- und/oder Softwareaktualisierung bei einem Feldgerät, das eine erfindungsgemäße elektronische Einheit aufweist, mit den folgenden Schritten:
- Entnehmen einer Smart-Card, die die zu aktualisierende Hard- und/oder Software aufweist, aus dem Feldgerät; und
- Einsetzen einer Smart-Card, die die aktualisierte Hard- und/oder Software aufweist, in das Feldgerät.

Auch in diesem Fall kann es vorteilhaft sein, wenn die Speichermittel nicht vollständig auf der Smart-Card vorgesehen sind, da in diesem Fall zum Betrieb erforderliche Daten an anderer Stelle zwischengespeichert werden können, bevor die Smart-Card ausgetauscht wird.

Der Erfindung liegt die Erkenntnis zugrunde, dass durch den Einsatz von für andere Anwendungsfälle entworfenen Smart-Cards in Feldgeräten die Herstellungskosten der Feldgeräte deutlich gesenkt werden können ohne die Leistungsfähigkeit einzuschränken. Darüber hinaus wird eine Hard- und/oder Softwareaktualisierung deutlich vereinfacht. Die erfindungsgemäße elektronische Einheit ist ohne Veränderung des Schaltungslayouts in den unterschiedlichsten Feldgeräten verwendbar, wobei die gerätespezifischen Anforderungen insbesondere durch den Einsatz unterschiedlich programmierter Smart-Cards erfüllt werden können.

Die Erfindung wird nun unter Bezugnahme auf die beigefügten Zeichnungen anhand bevorzugter Ausführungsformen beispielhaft erläutert.

Es zeigen:
- Figur 1: eine elektronische Einheit für ein Feldgerät gemäß dem Stand der Technik;
- Figur 2: eine erste Ausführungsform der erfindungsgemäßen elektronischen Einheit für ein Feldgerät; und
- Figur 3: eine zweite Ausführungsform der erfindungsgemäßen elektronischen Einheit für ein Feldgerät.

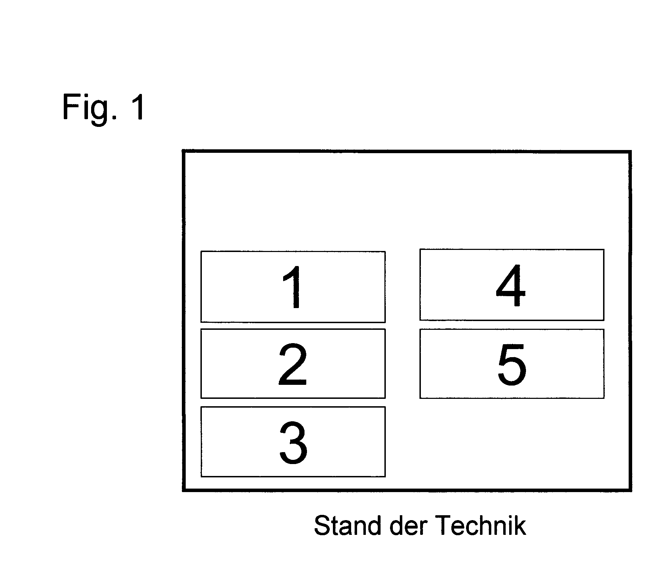

Die in Figur 1 dargestellte bekannte elektronische Einheit für ein Feldgerät weist eine gerätespezifische analoge Schaltung 1 auf. Die analoge Schaltung 1 kann beispielsweise zur Sensorsignalkonditionierung und/oder zur Ein-/Ausgabe von analogen Signalen verwendet werden. Sofern es sich bei dem die elektronische Einheit verwendenden Feldgerät um einen Aktor handelt, kann die analoge Schaltung 1 gegebenenfalls zusätzlich oder alternativ eine Leistungselektronik zur Ansteuerung des Aktors aufweisen. Weiterhin ist eine gerätespezifische digitale Schaltung 2 vorgesehen. Die digitale Schaltung 2 kann beispielsweise zur binären Ein-/Ausgabe und/oder zur Kommunikation mit dem Feldbus dienen. Die in Figur 1 dargestellte elektronische Einheit für ein Feldgerät weist weiterhin eine Energieversorgungseinheit 3 auf. Eine Mikroprozessoreinheit ist mit dem Bezugszeichen 4 versehen. Weiterhin sind Speichermittel 5 vorgesehen, die beispielsweise RAM- und/oder ROM-(EPROM, EEPROM, Flash-Speicher)-Elemente umfassen können. Die in Figur 1 dargestellte elektronische Einheit für ein Feldgerät weist die eingangs erläuterten Nachteile hinsichtlich der Herstellungskosten und der Flexibilität auf.

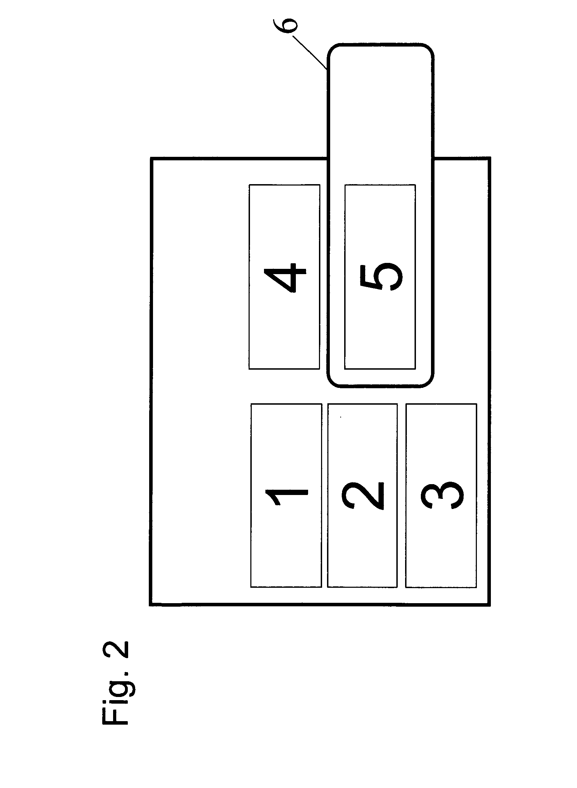

Figur 2 zeigt eine erste Ausführungsform der erfindungsgemäßen elektronischen Einheit für ein Feldgerät. Die Komponenten 1 bis 5 können die anhand von Figur 1 erläuterten Funktionsmerkmale aufweisen und werden daher nicht erneut erläutert. Der Unterschied zu der in Figur 1 dargestellten elektronischen Einheit für ein Feldgerät besteht darin, dass die Speichermittel 5 von einer Speicher-Smart-Card 6 bereitgestellt werden, die über eine geeignete Schnittstelle mit einer oder mehreren der Komponenten 1 bis 4 zusammenwirkt. Als Schnittstelle kommt sowohl eine Schnittstelle ohne mechanische Kontakte als auch eine Schnittstelle mit mechanischen Kontakten in Betracht. In Fällen, in denen die Speichermittel 5 einen Programmcode enthalten, ist es zu Zwecken einer Softwareaktualisierung beispielsweise ausreichend, die Smart-Card 6 durch eine andere Smart-Card auszutauschen, die die aktualisierten Daten beziehungsweise den aktualisierten Programmcode enthält.

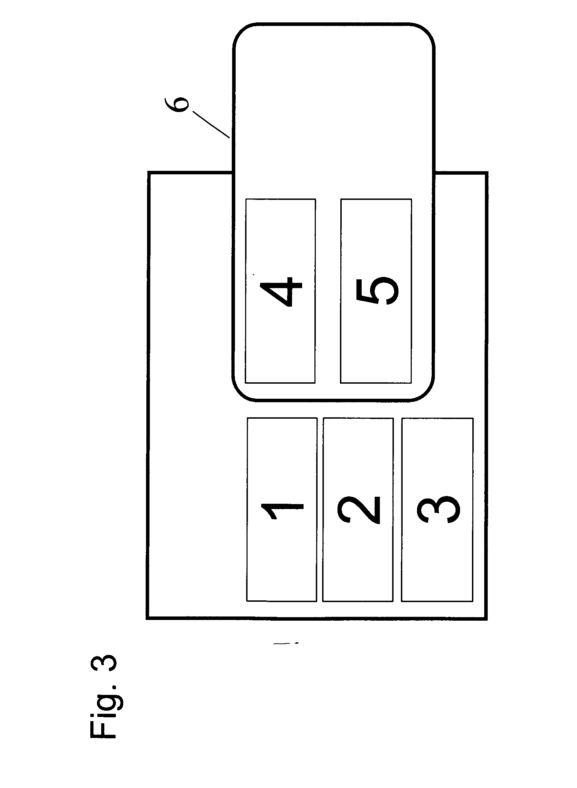

Figur 3 zeigt eine zweite Ausführungsform der erfindungsgemäßen elektronischen Einheit für ein Feldgerät, wobei die Komponenten 1 bis 5 wieder die anhand von Figur 1 bereits erläuterten Funktionsmerkmale aufeisen können und daher nicht erneut erläutert werden. Im Gegensatz zu der elektronischen Einheit gemäß Figur 1 ist bei der in Figur 3 dargestellten elektronischen Einheit für ein Feldgerät jedoch vorgesehen, dass sowohl die Mikroprozessoreinheit 4 als auch die Speichermittel 5 von einer Smart-Card 6 bereitgestellt werden, so dass beispielsweise ein Hard- und Softwareupgrade in einfacher Weise möglich ist.

Obwohl dies nicht dargestellt ist, können die erfindungsgemäßen elektronischen Einheiten neben den von der Smart-Card 6 bereitgestellten Speichermitteln 5 gegebenenfalls zusätzliche fest vorgesehene Speichermittel aufweisen. Gleiches gilt sinngemäß für mehrere Mikroprozessoren. Weiterhin kann vorgesehen sein, dass die erfindungsgemäße elektronische Einheit mehrere Schnittstellen für mehrere, gegebenenfalls unterschiedliche, Smart-Cards aufweist.

Mit den in den Figur 2 und 3 dargestellten Ausführungsformen der erfindungsgemäßen elektronischen Einheit für ein Feldgerät können unter anderem die erfindungsgemäßen Verfahren zur Durchführung einer Datensicherung bei einem Feldgerät, zur Übertragung von Daten von einem ersten Feldgerät zu einem zweiten Feldgerät und zur Durchführung einer Hard- und/oder Softwareaktualisierung durchgeführt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Elektronische Einheit für ein Feldgerät, insbesondere für ein Feldgerät zur Verwendung im Bereich der Prozessautomatisierung, wobei die elektronische Einheit zumindest im Betriebszustand wenigstens einen Mikroprozessor (4) und Speichermittel (5) aufweist, **dadurch gekennzeichnet, dass** sie wenigstens eine Schnittstelle für eine Smart-Card (6) aufweist, die im Betriebszustand der elektronischen Einheit zumindest einen Mikroprozessor (4) und/oder zumindest einen Teil der Speichermittel (5) bereitstellt.

2. Elektronische Einheit nach Anspruch 1, **dadurch gekennzeichnet, dass** sie im Betrieb auf der zumindest einen Smart-Card (6) vorgesehene Speichermittel (5) zum Speichern von Produktdaten und/oder Produktidentifikationsdaten und/oder Konfigurationsdaten und/oder während des Betriebs erzeugten Temporärdaten und/oder zu Wartungszwecken verwendeten Lebensdauerdaten verwendet.

3. Elektronische Einheit nach Anspruch 1 oder 2, **dadurch gekennzeichnet, dass** sie im Betrieb auf der zumindest einen Smart-Card (6) vorgesehene Speichermittel (5) zum Speichern von Programmdaten verwendet, die von zumindest einem Mikroprozessor (4) der elektronischen Einheit abgearbeitet werden.

4. Elektronische Einheit nach einem der vorhergehenden Ansprüche, **dadurch gekennzeichnet, dass** sie im Betrieb einen auf der zumindest einen Smart-Card (6) vorgesehenen Mikroprozessor (4) zur Signalgewinnung und/oder zur Signalverarbeitung und/oder zur Steuerung der Kommunikation zwischen Komponenten (1, 2, 3) der elektronischen Einheit und/oder zur Steuerung der Kommunikation mit externen Komponenten und/oder zum Datenaustausch mit den Speichermitteln (5) verwendet.

5. Elektronische Einheit nach einem der vorhergehenden Ansprüche, **dadurch gekennzeichnet, dass** sie im Betrieb einen auf der zumindest einen Smart-Card (6) vorgesehenen Mikroprozessor (4) zur Durchführung von Prozess-Steuerungs-/Regelungs-Funktionen verwendet.

6. Elektronische Einheit nach einem der vorhergehenden Ansprüche, **dadurch gekennzeichnet, dass** zumindest eine Schnittstelle für eine Smart-Card (6) eine kontaktlose Schnittstelle ist.

7. Elektronische Einheit nach einem der vorhergehenden Ansprüche, **dadurch gekennzeichnet, dass** zumindest eine Schnittstelle für eine Smart-Card (6) eine Schnittstelle mit mechanischen Kontakten ist.

8. Elektronische Einheit nach einem der vorhergehenden Ansprüche, **dadurch gekennzeichnet, dass** die zumindest eine Smart-Card (6) im Betrieb der elektronischen Einheit über ein oder mehrere Smart-Card-Standardprotokolle mit Komponenten (1, 2, 3) der elektronischen Einheit kommuniziert.

9. Verwendung einer Smart-Card in einer elektronischen Einheit nach einem der vorhergehenden Ansprüche.

10. Feldgerät mit einer elektronischen Einheit nach einem der Ansprüche 1 bis 8.

11. Verfahren zur Durchführung einer Datensicherung bei einem Feldgerät, das eine elektronische Einheit nach einem der Ansprüche 1 bis 8 aufweist, mit den folgenden Schritten:
- Speichern der zu sichernden Daten auf einer Smart-Card (6); und
- Entnehmen der Smart-Card (6) aus dem Feldgerät.

12. Verfahren zur Übertragung von Daten von einem ersten Feldgerät, das eine elektronische Einheit nach einem der Ansprüche 1 bis 8 aufweist, zu einem zweiten Feldgerät, das eine elektronische Einheit nach einem der Ansprüche 1 bis 8 aufweist, mit den folgenden Schritten:
- Einsetzen einer Smart-Card (6) in das erste Feldgerät;
- Speichern der zu übertragenden Daten auf der Smart-Card (6);
- Entfernen der Smart-Card (6) aus dem ersten Feldgerät; und
- Einsetzen der Smart-Card (6) in das zweite Feldgerät.

13. Verfahren zur Durchführung einer Hard- und/oder Softwareaktualisierung bei einem Feldgerät, das eine elektronische Einheit nach einem der Ansprüche 1 bis 8 aufweist, mit den folgenden Schritten:
- Entnehmen einer Smart-Card (6), die die zu aktualisierende Hard- und/oder Software aufweist, aus dem Feldgerät; und
- Einsetzen einer Smart-Card (6), die die aktualisierte Hard- und/oder Software aufweist, in das Feldgerät.
